# FASCICULE DE BREVET EUROPEEN

(11) **EP 2 846 133 B1**
(45) Date de publication et mention de la délivrance du brevet: **20.04.2016**
(21) Numéro de dépôt: 14180904.6
(22) Date de dépôt: 14.08.2014
(51) Int. Cl.: G01C 23/00, G01C 21/20, G06T 17/05

(54) **Procédé de représentation synthétique tridimensionnelle conforme d'une cartographie de terrain en fonction de la visibilité**
Synthetisches 3D-Darstellungsverfahren gemäß einer Kartografie des Geländes in Abhängigkeit von der Sichtbarkeit
Method for compliant three-dimensional synthetic representation of a terrain map in accordance with visibility

(30) Priorité: 06.09.2013 FR 1302074
(43) Date de publication de la demande: 11.03.2015
(73) Titulaire: THALES, 92400 Courbevoie (FR)
(72) Inventeur: Servantie, Xavier, 33600 PESSAC (FR); Rouzes, Siegfried, 33185 LE HAILLAN (FR); Monvoisin, Emmanuel, 33800 BORDEAUX (FR)
(74) Mandataire: Bréda, Jean-Marc

(56) Documents cités:
- US-A1- 2007 171 094
- US-B1- 7 262 713
- US-B1- 8 049 644
- BENNETT P J: "Enhanced navigation and displays from passive terrain referenced avionics", 19880523; 19880523 - 19880527, 23 mai 1988 (1988-05-23), pages 209-216, XP010076893,

## Description

Le domaine de l'invention est celui de la représentation cartographique synthétique et tridimensionnelle représentée en vue conforme. On entend par représentation conforme une représentation cartographique qui se superpose parfaitement au terrain effectivement vu par l'observateur. La superposition optique est assurée par un système optique qui projette l'image synthétique vers l'oeil de l'observateur. Ce système optique comporte un mélangeur ou combineur optique qui assure la superposition de l'image sur le paysage extérieur. Ce type de représentation est particulièrement utilisé en aéronautique de façon à assurer le pilotage par mauvaise visibilité ou de nuit.

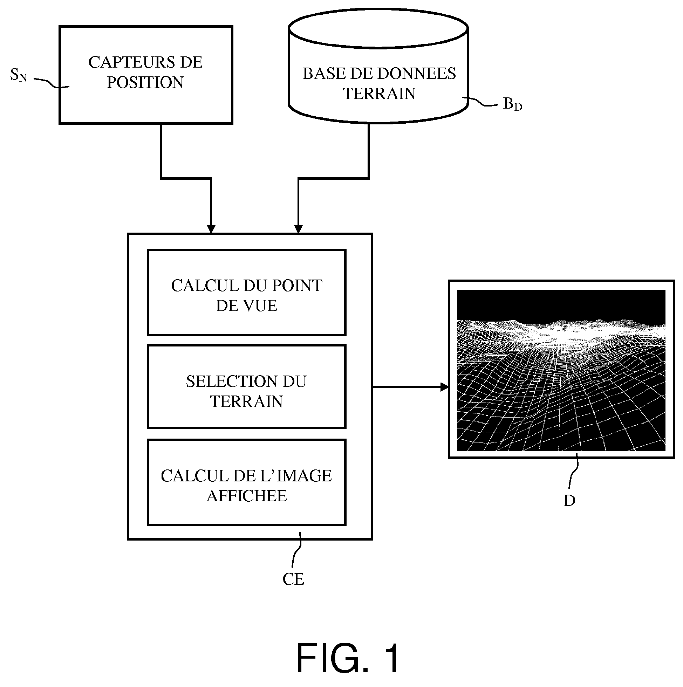

Un système de représentation cartographique est représenté sur la figure 1. Ce système comporte une base B_{D} de données représentative du terrain survolé, des moyens S_{N} permettant de déterminer la position et l'orientation du système optique affichant l'image cartographique, un générateur d'images CE et le système optique de projection D. Le générateur d'images CE assure trois fonctions principales qui sont le calcul du point de vue, la sélection de la zone de terrain à afficher et le calcul de l'image à afficher en fonction du point de vue.

Un des points délicats de cette représentation tridimensionnelle est qu'elle doit être suffisamment complète et précise pour donner une bonne représentation du terrain survolé qui puisse être utile au pilotage et à la navigation et suffisamment discrète pour ne pas saturer l'image naturelle du paysage.

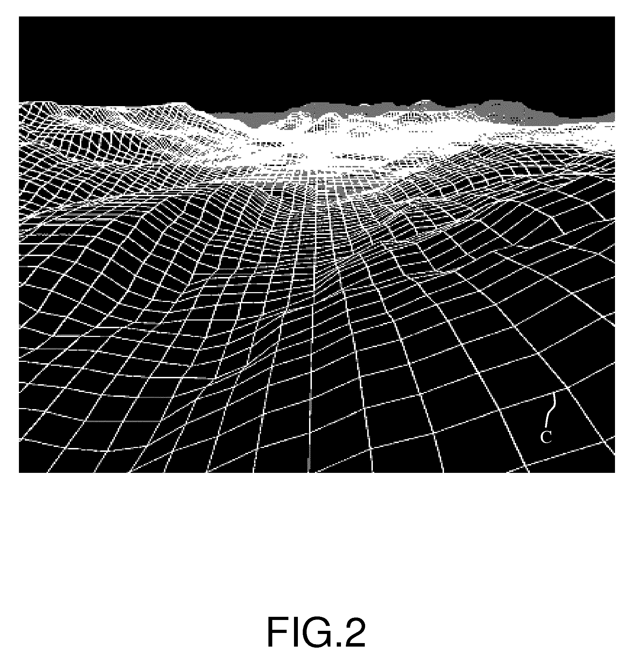

Différentes solutions ont été proposées. A titre d'exemples, les brevets US 8 264 498 intitulé « System, apparatus, and method for presenting a monochrome image of terrain on a head-up display unit » US 7 098 913 intitulé «Method and system for providing depth cues by attenuating distant displayed terrain » et US 2007/0171094 intitulé « Real-time, three-dimensional synthetic vision display of sensor-validated terrain data » proposent diverses approches de cette représentation. Une approche classique consiste à représenter le terrain survolé sous forme d'un carroyage simple C comme représenté en figure 2 où le carroyage est représenté par des lignes blanches sur fond noir. La perception de la distance se fait uniquement par la taille des éléments géométriques du carroyage qui sont délimités par les traits blancs sur la figure 2. En effet, sous l'effet de la perspective, plus leur distance est grande par rapport au point de vue affiché, plus les éléments géométriques sont petits à l'écran. Comme on le voit sur la figure 2, ce type d'affichage a naturellement tendance à saturer de lignes les parties les plus éloignées de l'observateur alors que, sous certaines conditions météorologiques, les parties lointaines du terrain peuvent être parfaitement identifiables par l'observateur, notamment par temps clair.

Le procédé de représentation cartographique selon l'invention ne présente pas ces inconvénients. En effet, il permet de n'afficher une représentation cartographique que là où elle est nécessaire, c'est-à-dire dans les zones à visibilité réduite, sous ou au dessus des nuages.

Plus précisément, l'invention concerne un procédé de représentation synthétique tridimensionnelle conforme d'un terrain selon la revendication annexée 1.

Avantageusement, la représentation cartographique conforme est calculée pour une partie du terrain située sous une altitude maximale ou au dessus d'une altitude minimale.

Avantageusement, la représentation cartographique conforme est calculée pour une partie du terrain située à partir d'une distance minimale.

Avantageusement, le système d'aide comprend une base de données météorologiques comportant au moins les altitudes de la base et du sommet de la couche nuageuse, si elle existe, au dessus du terrain perceptible à travers le système de visualisation, la représentation cartographique conforme étant calculée pour la partie cachée du terrain située entre la base et le sommet de la couche nuageuse.

Avantageusement, la représentation cartographique conforme est un carroyage composé de lignes de niveaux selon deux directions perpendiculaires.

L'invention concerne également un système d'aide au pilotage et à la navigation d'un aéronef selon la revendication annexée 6.

L'invention sera mieux comprise et d'autres avantages apparaîtront à la lecture de la description qui va suivre donnée à titre non limitatif et grâce aux figures annexées parmi lesquelles :
La figure 1 représente le synoptique d'un système d'aide au pilotage et à la navigation selon l'art antérieur ;
La figure 2 représente une représentation cartographique conforme sous forme de carroyage selon l'art antérieur ;
La figure 3 représente le synoptique d'un système d'aide au pilotage et à la navigation selon l'invention ;
la figure 4 représente un paysage sans représentation cartographique ;
la figure 5 représente une représentation cartographique conforme sous forme de carroyage selon l'invention appliquée au paysage précédent.

Pour être mis en oeuvre, le procédé de représentation graphique selon l'invention nécessite un système d'aide au pilotage et à la navigation d'un véhicule.

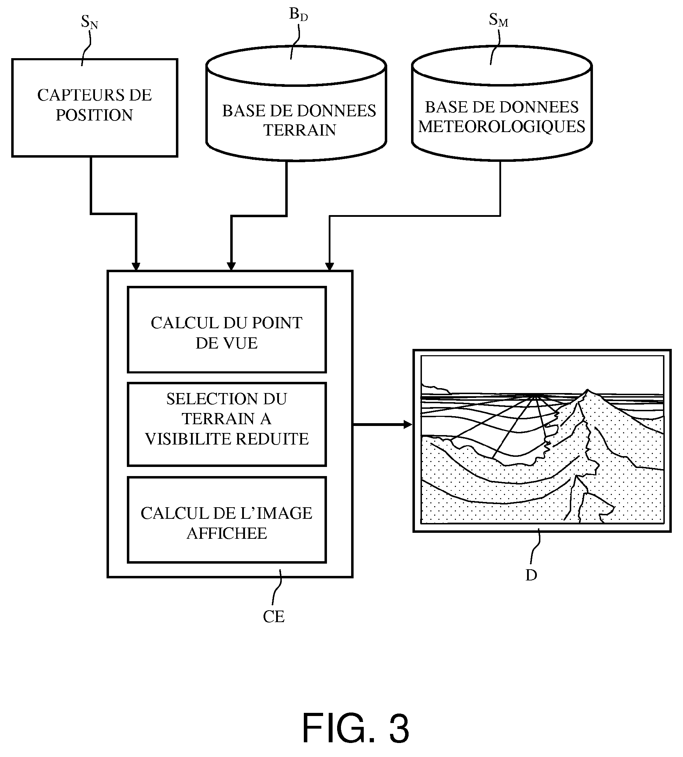

Dans son application principale, le procédé est mis en oeuvre dans un aéronef de façon à fournir au pilote la meilleure représentation possible du paysage extérieur. Le système d'aide au pilotage est le système avionique embarqué de l'appareil. De tels systèmes existent aujourd'hui sur tous les aéronefs modernes et sont connus de l'homme du métier. Ils sont également connus sous l'acronyme « SVS », signifiant « Système de Vision Synthétique ». Un tel système est représenté sur la figure 3. Il comporte au moins :
- Un système de navigation S_{N} permettant de déterminer la position et l'attitude de l'aéronef. A titre d'exemples, ces systèmes de navigation comportent des centrales inertielles et/ou des systèmes de type « GPS », acronyme signifiant « Global Positioning System »;
- Une base B_{C} de données cartographiques du terrain survolé ;
- Un calculateur électronique CE permettant de faire, entre autres, du traitement de données et des calculs de représentation graphique et mettant en oeuvre le procédé d'affichage selon l'invention ;
- Un système de visualisation D comportant préférentiellement un dispositif de visualisation dit « See-Through Displays». Ces dispositifs peuvent être des écrans transparents affichant la représentation cartographique tels des écrans à cristaux liquides ou des viseurs « Tête Haute », encore appelés « Head-Up Displays » qui projettent une image collimatée de la représentation cartographique ;
- Un système d'informations météorologiques S_{M}, les données lui étant fournies par le radar météorologique de l'appareil ou par des stations météorologiques au sol.

Le procédé selon l'invention comporte les étapes suivantes :
Etape 1 : Calcul, pour une position déterminée de l'aéronef, du terrain perceptible à travers le système de visualisation ;
Etape 2 : Sélection d'une partie dudit terrain en fonction d'une distance ou d'une altitude ou d'une gamme d'altitudes ;
Etape 3 : Calcul d'une représentation cartographique conforme tridimensionnelle de la dite partie du terrain sélectionnée ;
Etape 4 : Affichage par le système de visualisation de la dite représentation cartographique.

L'étape 2 est l'étape nouvelle et importante du procédé selon l'invention. La sélection du terrain sur lequel une représentation cartographique conforme est affichée se fait essentiellement sur un critère de visibilité du terrain. On affiche la représentation cartographique là où le terrain est difficilement visible ou complètement masqué.

Dans un premier mode de sélection, on sélectionne le terrain situé au-delà de la distance de visibilité. Cette distance de visibilité peut être déterminée automatiquement à partir de données météorologiques et des conditions de vol. Elle peut être choisie par le pilote.

Dans un second mode de sélection, le calculateur détermine l'épaisseur de la couche nuageuse à partir d'informations météorologiques. Cette couche nuageuse a une altitude minimale BN qui peut correspondre à la surface du terrain et une altitude maximale HN. L'aéronef peut se trouver sous la couche nuageuse. Dans ce cas, le terrain sélectionné se situe au-dessus de l'altitude minimale BN. L'aéronef peut se trouver dans la couche nuageuse. Dans ce cas, tout le terrain est sélectionné. L'aéronef peut se situer au-dessus de la couche nuageuse. Dans ce dernier cas, le terrain sélectionné est situé en dessous d'une altitude maximale HN.

Dans un troisième mode ce sélection, la sélection du terrain est réalisée automatiquement à partir d'informations météorologiques par le calculateur.

Une fois la sélection du terrain effectuée, le calculateur calcule une représentation cartographique conforme tridimensionnelle de la dite partie du terrain sélectionnée. A titre d'exemple, cette représentation est un carroyage, le terrain étant représenté sous forme d'une projection de carreaux réguliers qui épousent la forme du terrain. Il existe de nombreuses variantes à cette première représentation, comme la représentation des lignes de crêtes.

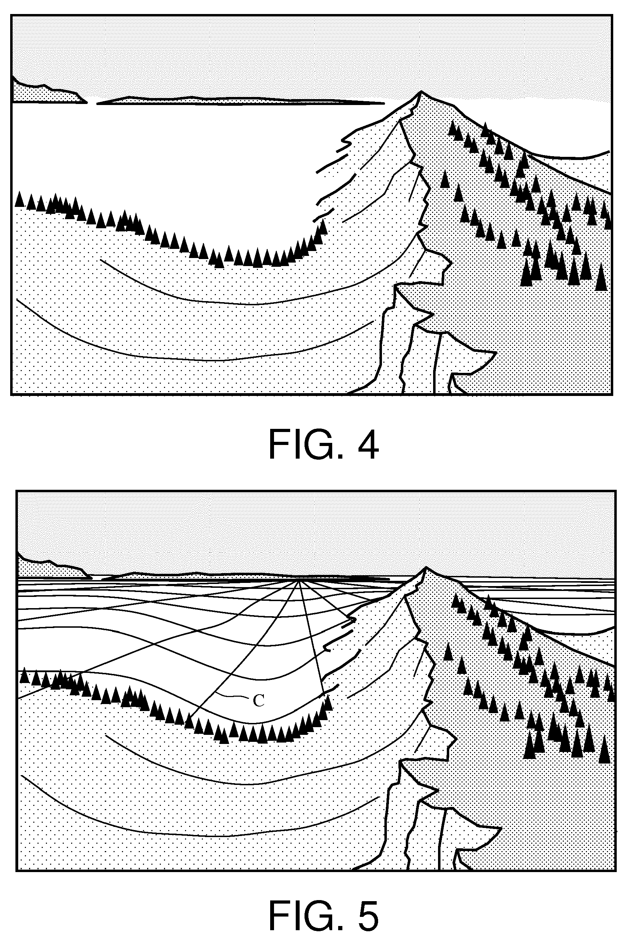

Les figures 4 et 5 représentent une illustration du procédé selon l'invention. Elles représentent, avec les contraintes inhérentes aux figures de brevet, un paysage vu à travers l'écran semi-transparent d'un système de visualisation. On aperçoit une montagne au premier plan à droite de la figure 4 et une couche nuageuse qui masque tout l'arrière du paysage. La montagne est représentée en traits pointillés et la couche nuageuse est représentée en blanc sur la figure 4. L'aéronef se situe au-dessus de la couche nuageuse et la partie du terrain située dessous est invisible. Les données météorologiques permettent de connaître l'altitude maximale de cette couche nuageuse. Dans ce cas, le calculateur calcule la représentation cartographique du terrain masqué par la couche nuageuse et l'affiche sur l'écran.

Dans le cas de la figure 5, cet affichage est fait sous forme d'un carroyage représenté en traits noirs sur le fond blanc de la couche nuageuse. Dans l'image réelle, le carroyage est représenté en traits colorés lumineux, généralement monochromes. La luminance des traits est choisie suffisante pour que le carroyage soit bien visible sur le fond des nuages.

Le pilote peut ainsi apprécier les éléments de terrain dissimulés par la couche de nuages sans surcharger inutilement les éléments au premier plan clairement visibles.

## Revendications

1. Procédé de représentation synthétique tridimensionnelle conforme d'un terrain, ledit procédé étant mis en oeuvre dans un système d'aide au pilotage et à la navigation d'un aéronef, ledit système d'aide comprenant au moins un système de navigation (S_{N}), une base de données cartographiques (B_{C}), un système d'informations météorologiques (S_{M}), des moyens de calcul électronique (CE) et un système de visualisation (D) permettant la superposition d'images synthétiques sur l'extérieur ledit procédé comportant les étapes suivantes :
Etape 1 : Calcul, pour une position déterminée du véhicule, du terrain perceptible à travers le système de visualisation ;
Etape 2 : Sélection d'une partie dudit terrain en fonction d'une distance ou d'une altitude ou d'une gamme d'altitudes, et d'un critère de visibilité du terrain ;
Etape 3 : Calcul d'une représentation cartographique (C) conforme tridimensionnelle de la dite partie du terrain sélectionnée ;
Etape 4 : Affichage par le système de visualisation (D) de ladite représentation cartographique.

2. Procédé de représentation d'un terrain selon la revendication 1, **caractérisé en ce que** la représentation cartographique conforme est calculée pour une partie du terrain située sous une altitude maximale et/ou au dessus d'une altitude minimale.

3. Procédé de représentation d'un terrain selon la revendication 1, **caractérisé en ce que** la représentation cartographique conforme est calculée pour une partie du terrain située à partir d'une distance minimale.

4. Procédé de représentation d'un terrain selon la revendication 1, **caractérisé en ce que** le système d'aide comprend une base de données météorologiques (S_{M}) comportant au moins les altitudes de la base et du sommet de la couche nuageuse, si elle existe, au dessus du terrain perceptible à travers le système de visualisation, la représentation cartographique conforme étant calculée pour la partie cachée du terrain située entre la base et le sommet de la couche nuageuse.

5. Procédé de représentation d'un terrain selon l'une des revendications précédentes, **caractérisé en ce que** la représentation cartographique conforme est un carroyage (C) composé de lignes de niveaux selon deux directions perpendiculaires.

6. Système d'aide au pilotage et à la navigation d'un aéronef, ledit système d'aide comprenant au moins un système de navigation (S_{N}), une base de données cartographiques (B_{C}), un système d'informations météorologiques (S_{M}) et un système de visualisation (D) permettant la superposition d'images synthétiques sur l'extérieur du véhicule, **caractérisé en ce que** ledit système comporte des moyens de calcul électroniques (CE) agencés de façon à mettre en oeuvre le procédé de représentation synthétique tridimensionnelle conforme d'un terrain selon l'une des revendications précédentes.

## Patentansprüche

1. Verfahren zum synthetischen dreidimensionalen konformen Darstellen eines Geländes, wobei das Verfahren in einem System zum Unterstützen des Steuerns und Navigierens eines Luftfahrzeugs ausgeführt wird, wobei das Unterstützungssystem wenigstens ein Navigationssystem (S_{N}), eine kartografische Datenbank (Bc), ein meteorologisches Informationssystem (S_{M}), elektronische Rechenmittel (CE) und ein Visualisierungssystem (D) umfasst, das die Übereinanderlage von synthetischen Bildern der Außenseite zulässt, wobei das Verfahren die folgenden Schritte beinhaltet:
Schritt 1: Berechnen, für eine vorbestimmte Position des Fahrzeugs, des durch das Visualisierungssystem erkennbaren Geländes;
Schritt 2: Auswählen eines Teils des Geländes in Abhängigkeit von einer Entfernung oder einer Höhe oder eines Höhenbereichs und von einem Sichtbarkeitskriterium des Geländes;
Schritt 3: Berechnen einer dreidimensionalen kartografischen konformen Darstellung (C) des Teils des gewählten Geländes;
Schritt 4: Anzeigen der kartografischen Darstellung mit dem Visualisierungssystem (D).

2. Verfahren zum Darstellen eines Geländes nach Anspruch 1, **dadurch gekennzeichnet, dass** die konforme kartografische Darstellung für einen Teil des Geländes berechnet wird, der sich unter einer maximalen Höhe und/oder über einer minimalen Höhe befindet.

3. Verfahren zum Darstellen eines Geländes nach Anspruch 1, **dadurch gekennzeichnet, dass** die konforme kartografische Darstellung für einen Teil des Geländes berechnet wird, der sich in einer Mindestentfernung befindet.

4. Verfahren zum Darstellen eines Geländes nach Anspruch 1, **dadurch gekennzeichnet, dass** das Unterstützungssystem eine meteorologische Datenbank (S_{M}) umfasst, die wenigstens die Höhen der Basis und der Spitze der Wolkenschicht, falls vorhanden, über dem durch das Visualisierungssystem erkennbaren Gelände umfasst, wobei die konforme kartografische Darstellung für den verborgenen Teil des Geländes berechnet wird, der sich zwischen der Basis und der Spitze der Wolkenschicht befindet.

5. Verfahren zum Darstellen eines Geländes nach einem der vorherigen Ansprüche, **dadurch gekennzeichnet, dass** die konforme kartografische Darstellung ein Gitternetz (C) bestehend aus Niveaulinien gemäß zwei senkrechten Richtungen ist.

6. System zum Unterstützen des Steuerns und Navigierens eines Flugzeugs, wobei das Unterstützungssystem wenigstens ein Navigationssystem (S_{N}), eine kartografische Datenbank (B_{C}), ein meteorologisches Informationssystem (S_{M}) und ein Visualisierungssystem (D) umfasst, das die Übereinanderlage von synthetischen Bildern der Außenseite des Fahrzeugs zulässt, **dadurch gekennzeichnet, dass** das System elektronische Rechenmittel (CE) umfasst, die zum Ausführen des Verfahrens zum synthetischen dreidimensionalen konformen Darstellen eines Geländes nach einem der vorherigen Ansprüche ausgelegt sind.

## Claims

1. Method for a synthetic three-dimensional corresponding representation of a terrain, the method being carried out in an auxiliary system for piloting and navigating an aircraft, the auxiliary system comprising at least one navigation system (S_{N}), a cartographic database (B_{C}), a meteorological information system (S_{M}), electronic calculation means (CE) and a display system (D) which allows the superimposition of synthetic images of the exterior, the method comprising the following steps:
Step 1: Calculating, for a predetermined position of the vehicle, the terrain that is perceptible via the display system;
Step 2: Selecting a portion of the terrain as a function of a distance or an altitude or a range of altitudes, and a visibility criterion for the terrain;
Step 3: Calculating a three-dimensional corresponding cartographic representation (C) of the portion of the terrain selected;
Step 4: Display, by the display system (D), of the cartographic representation.

2. Method for representing a terrain according to claim 1, **characterised in that** the corresponding cartographic representation is calculated for a portion of the terrain located under a maximum altitude and/or above a minimum altitude.

3. Method for representing a terrain according to claim 1, **characterised in that** the corresponding cartographic representation is calculated for a portion of the terrain located from a minimum distance.

4. Method for representing a terrain according to claim 1, **characterised in that** the auxiliary system comprises a meteorological database (S_{M}) comprising at least the altitudes of the base and the top of the cloud layer, if it exists, above the terrain perceptible via the display system, the corresponding cartographic representation being calculated for the hidden portion of the terrain located between the base and the top of the cloud layer.

5. Method for representing a terrain according to any one of the preceding claims, **characterised in that** the corresponding cartographic representation is a grid (C) which is composed of level lines in accordance with two perpendicular directions.

6. Auxiliary system for piloting and navigating an aircraft, the auxiliary system comprising at least one navigation system (S_{N}), a cartographic database (B_{C}), a meteorological information system (S_{M}) and a display system (D) which allows the superimposition of synthetic images of the exterior of the vehicle, **characterised in that** the system comprises electronic calculation means (CE) which are arranged so as to carry out the synthetic three-dimensional corresponding representation method of a terrain according to any one of the preceding claims.
